# EUROPÄISCHE PATENTANMELDUNG

(11) **EP 2 719 903 A2**
(43) Veröffentlichungstag der Anmeldung: **16.04.2014**
(21) Anmeldenummer: 13004271.6
(22) Anmeldetag: 29.08.2013
(51) Int. Cl.: F15B 13/043, F16K 31/42

(54) **Ventilanordnung**

(30) Priorität: 12.10.2012 DE 102012020066
(71) Anmelder: ROBERT BOSCH GMBH, 70442 Stuttgart (DE)
(72) Erfinder: Engert, Holger, 97855 Triefenstein (DE); Schmidt, Stefan, 97816 Lohr am Main (DE); Foersterling, Heino, 97816 Lohr am Main (DE)
(74) Vertreter: Wiesmann, Stephan

(57) **Zusammenfassung**

Offenbart ist, insbesondere erfindungsgemäß, eine Ventilanordnung mit einem Proportionalventil das über eine Vorsteuerschaltung vorgesteuert ist. Diese hat zum Verstellen eines Ventilschiebers des Proportionalventils in eine erste Richtung zumindest zwei Schaltventile mit unterschiedlichen Nenngrößen. Zum Verstellen des Ventilschiebers in entgegengesetzter Richtung sind ebenfalls zumindest zwei Schaltventile in unterschiedlichen Nenngrößen vorgesehen. Das jeweils größere Schaltventil dient zum schnellen Verstellen des Ventilschiebers und führt somit zu kurzen Stellzeiten, während die jeweils kleineren Schaltventile zur Feinpositionierung des Ventilschiebers eingesetzt werden.

## Beschreibung

Die Erfindung betrifft eine Ventilanordnung mit einem hydraulischen Proportionalventil gemäß dem Oberbegriff des Patentanspruchs 1.

In der DE 10 2009 030 888 A1 ist eine derartige Ventilanordnung offenbart. Diese hat ein Proportionalventil als Hauptstufe mit einem eine Druckmittelverbindung zwischen einem Druckmittelspeicher und einem Verbraucher auf- und zusteuerbaren Stufenkolben. Der Stufenkolben hat eine kleinere Stirnfläche und eine von dieser wegweisende einen Federraum begrenzende Rückfläche. In Längsrichtung gesehen ist zwischen der Rückfläche und der Stirnfläche eine weg von der Rückfläche weisende Ringfläche am Stufenkolben vorgesehen. Über eine im Federraum angeordnete Ventilfeder wird der Stufenkolben mit einer Federkraft in Richtung seines Ventilsitzes beaufschlagt. Die Ringfläche des Stufenkolbens ist mit Druckmittel vom Druckmittelspeicher entgegen der Federkraft der Ventilfeder beaufschlagbar. Die Stirnfläche ist im geschlossenen Zustand des Proportionalventils vom Ausgangsdruck bzw. vom Verbraucherdruck in Richtung entgegen der Federkraft der Ventilfeder beaufschlagt und im geöffneten Zustand des Proportionalventils vom Druckmittel des Druckmittelspeichers. Die Rückfläche wiederum ist über Ventile als Vorstufe mit Druckmittel vom Druckmittelspeicher oder mit einem Tankdruck in Richtung der Federkraft der Ventilfeder, also in Richtung einer Schließposition des Proportionalventils, beaufschlagt. Im Druckmittelströmungspfad zwischen dem Druckmittelspeicher und dem Federraum sind zum Steuern einer Druckmittelverbindung ein proportional verstellbares Wegeventil und zusätzlich fluidisch parallel angeordnete Schaltventile vorgesehen. Im Strömungspfad zwischen dem Federraum und dem Tank sind ebenfalls ein proportional verstellbares Wegeventil und fluidisch parallel dazu angeordnete Schaltventile vorgesehen.

Eine Fläche der Rückfläche entspricht etwa der Summe der Flächen der Stirn und Ringfläche. Zum Verschieben des Stufenkolbens des Proportionalventils in einer Richtung weg vom Ventilsitz wird der Federraum über die Ventile mit dem Tank verbunden, wodurch der an der Ringfläche anliegende Speicherdruck entgegen der Federkraft den Stufenkolben weg vom Ventilsitz bewegt. Um den Stufenkolben in einer bestimmten Hubposition zu halten, wird ein Druck im Federraum über die Ventile derart eingeregelt, dass die Summe aus einem Druckäquivalent der Federkraft und dem auf die Rückfläche wirkenden Druck des Federraums dem auf die Stirn- und Ringfläche des Stufenkolbens wirkenden Speicherdrucks entspricht. Zum Erfassen einer Hubposition des Stufenkolbens ist ein Wegmesssystem vorgesehen. Zum Schließen des Proportionalventils wird der Federraum über die Ventile mit dem Druckmittelspeicher verbunden, wodurch der Druck im Federraum zusammen mit dem Druckäquivalent der Federkraft den auf die Stirn- und Ringfläche wirkenden Druck übersteigt und der Stufenkolben in seine Schließposition bewegt wird.

Durch die Mehrzahl von Ventilen, die den Federraum mit dem Tank oder dem Druckmittelspeicher verbinden, kann bei Bedarf ein hoher Druckmitteldurchsatz erfolgen.

Nachteilig bei dieser Lösung ist, dass das proportional verstellbare Wegeventil der Vorstufe vergleichsweise lange Stellzeiten aufweist, anfällig gegenüber verschmutztem Druckmittel ist, vergleichsweise teuer ist und bei einer Schockbelastung zu einer Fehlfunktion neigt.

In der EP 0 828 946 B1 ist eine weitere Ventilanordnung für einen Verbraucher dargestellt. Ein Verbraucher ist hierbei über pulsgesteuerte Schaltventile mit einer Druckmittelquelle oder einer Druckmittelsenke verbindbar.

Sind die Schaltventile klein ausgebildet, weisen also einen kleinen Durchflussquerschnitt auf, so führt dies zu recht langen Stellzeiten des Verbrauchers. Sind die Schaltventile dagegen groß ausgebildet, so ist eine Feinpositionierung des Verbrauchers kaum möglich.

Dem gegenüber liegt der Erfindung die Aufgabe zugrunde, eine Ventilanordnung zu schaffen, die zu kurzen Stellzeiten führt, die eine geringe Anfälligkeit hinsichtlich einem verschmutzen Druckmittel hat, die kostengünstig ist, die zuverlässig bei hoher Schockbelastung funktioniert und die eine Feinpositionierung eines Verbrauchers ermöglicht.

Diese Aufgabe wird gelöst durch eine Ventilanordnung gemäß den Merkmalen des Patentanspruchs 1.

Sonstige vorteilhafte Weiterbildungen der Erfindung sind Gegenstand weiterer Unteransprüche.

Erfindungsgemäß ist eine Ventilanordnung mit einem hydraulischen Proportionalventil als Hauptstufe vorgesehen. Bei dem Proportionalventil handelt es sich beispielsweise um ein Wegeventil oder ein als Aktiv-Logikventil ausgebildetes Stromventil. Das Proportionalventil ist über eine Vorsteuerventilschaltung, die als Vorstufe eingesetzt ist, vorgesteuert. Diese ist vorzugsweise als Digitalhydraulikschaltung mit Schaltventilen ausgebildet. Schaltventile weisen in der Regel eine Feder auf, die einen Ventilschieber des Ventils in einer Grundstellung hält, wobei die Federkraft im Vergleich zur Kraft eines Betätigungsmagneten des Ventilschiebers bei Nennbeströmung schwach ist, so dass es innerhalb kürzester Zeit (2 ms für schnelle Schaltventile) nach Anlegen eines Stroms an den Betätigungsmagneten zu einem Durchschalten des Ventilschiebers in die Schaltstellung kommt. Zumindest zwei, insbesondere fluidisch parallel angeordnete, Schaltventile der Vorsteuerventilschaltung sind in einem Strömungspfad zwischen einem Versorgungsanschluss bzw. einer Druckmittelquelle und einer Verstellkammer des Proportionalventils vorgesehen. In einem weiteren Strömungspfad zwischen einem Tankanschluss und der Verstellkammer sind ebenfalls zumindest zwei Schaltventile vorgesehen. Somit sind jeweils mindestens zwei Schaltventile in einem Strömungspfad zwischen dem Versorgungsanschluss bzw. Tankanschluss und der Verstellkammer des Proportionalventils angeordnet. Mit Vorteil weisen die Schaltventile zumindest in einem Strömungspfad unterschiedliche Nenngrößen auf, d. h. sie haben unterschiedliche Nenndurchflusswerte. Somit werden ein kleines und ein großes Schaltventil eingesetzt.

Diese Lösung hat den Vorteil, dass das kleine Schaltventil in dem Strömungspfad zur Feinpositionierung und das große Ventil für einen großen Durchsatz von Druckmittel eingesetzt werden kann, was zu einer kurzen Stellzeit des Proportionalventils führt. Somit kann in vorrichtungstechnisch einfache Weise das Proportionalventil in äußerst kurzer Zeit auf- und zugesteuert werden, insbesondere wenn das große Schaltventil und optional zusätzlich das kleine Schaltventil geöffnet sind. Des Weiteren weist die Vorsteuerventilschaltung aufgrund ihrer Ausbildung mit Schaltventilen einen äußerst geringen Bauraumbedarf auf. Schaltventile sind ferner äußerst robust gegenüber verschmutztem Druckmittel oder einer Schockbelastung. Für die Möglichkeit einer Feinpositionierung des Proportionalventils und der zusätzlichen Möglichkeit kurze Stellzeiten zu schaffen, werden im Unterschied zum eingangs erläuterten Stand der Technik lediglich zwei Schaltventile benötigt. Die Schaltventile können hierbei äußerst geringe Stellzeiten von beispielsweise 0,5 bis 1 ms aufweisen und Volumenströme von beispielsweise bis 40 l/min ermöglichen. Des Weiteren sind Schaltventile äußerst kostengünstig. Soll ein Druckmitteldurchsatz erhöht werden, so werden einfach weitere, insbesondere große, Schaltventile eingesetzt. Die Nenngrößen der Schaltventile können abhängig von der Größe des Proportionalventils ausgewählt sein.

In weiterer Ausgestaltung der Erfindung sind die Schaltventile eines jeweiligen Strömungspfads fluidisch parallel angeordnet.

Mit Vorteil ist zumindest ein Schaltventil eines jeweiligen Strömungspfads, insbesondere das kleinere Schaltventil, getaktet mit einer pulsweiten Modulation ansteuerbar. Hierdurch kann es beispielsweise ballistisch eingesetzt werden, also mit der Möglichkeit, dass eine Pulsweite unter einer Ventildurchschaltzeit liegt, wodurch der Durchflusswert einstellbar ist.

Bevorzugter weise hat das Proportionalventil als Schließglied einen Stufenkolben mit einer ersten insbesondere in Öffnungsrichtung wirkenden Steuerfläche A₂ und einer zweiten insbesondere in Schließrichtung wirkenden Steuerfläche A₁. Die zweite Steuerfläche A₁ kann hierbei eine zweite Verstellkammer und die erste Steuerfläche A₂ eine erste Verstellkammer begrenzen, wobei die Steuerflächen in entgegen gesetzte Richtungen mit einem Druckmittel beaufschlagbar sind. Vorzugsweise ist die erste in Öffnungsrichtung wirkende Steuerfläche A₂ von den Schaltventilen vorgesteuert. Ein derartiges Proportionalventil kann durch die Schaltventile in äußerst kurzer Stellzeit verstellt werden und fein positioniert werden.

Vorzugsweise sind zur Steuerung der weiteren Verstellkammer jeweils zumindest zwei, insbesondere fluidisch parallel angeordnete, Schaltventile der Vorsteuerventilschaltung in einem Strömungspfad zwischen dem Versorgungsanschluss und der zweiten Verstellkammer und in einem Strömungspfad zwischen dem Tankanschluss und der zweiten Verstellkammer angeordnet. Hierdurch kann der Stufenkolben des Proportionalventils an seiner beiden Steuerflächen über die Schaltventile entweder mit dem Versorgungsanschluss oder dem Tankanschluss verbunden werden, wodurch dieser mit einer hohen Dynamik verstellbar ist. Wirkt die eine Steuerfläche in eine Verschieberichtung und die andere Steuerfläche in die andere Verschieberichtung, so kann der Stufenkolben in einer jeweiligen Richtung äußerst schnell verstellt werden und fein positioniert werden.

Bei einer alternativen Ausführungsform ist im Strömungspfad zwischen der zweiten Verstellkammer und dem Versorgungsanschluss ein Druckreduzierventil angeordnet. Der Stufenkolben kann somit mit einem gegenüber dem Druck des Versorgungsanschlusses reduzierten Druck beispielsweise in Schließrichtung vorgespannt werden. Dagegen kann die die erste Verstellkammer begrenzende Steuerfläche A₂ vollständig mit Druck vom Versorgungsanschluss beaufschlagt werden.

Mit Vorteil kann im Strömungspfad zwischen dem Druckreduzierventil und der zweiten Verstellkammer ein Druckmittelspeicher angeschlossen sein, wodurch bei einem Verschieben des Stufenkolbens und somit mit einer Veränderung des Volumens der von der zweiten Steuerfläche A₁ begrenzten zweiten Verstellkammer innerhalb kürzester Zeit Druckmittel aus dieser entlassen oder in diese beschickt werden kann.

Des Weiteren ist denkbar die Steuerflächen des Stufenkolbens des Proportionalventils in einer gleichen Größe auszugestalten, wodurch der Stufenkolben einfach aufgebaut sein kann und für das Proportionalventil beispielsweise ein herkömmliches Aktiv-Logikventil eingesetzt werden kann. Ein derartiges Aktiv-Logik-Ventil ist beispielsweise in dem Datenblatt der Anmelderin RD 21040/11.10 offenbart.

Alternativ ist denkbar, die zweite Verstellkammer unmittelbar mit dem Versorgungsanschluss zu verbinden, was vorrichtungstechnisch äußerst einfach und kostengünstig ist. Hierbei kann die erste Steuerfläche A₂ größer als die zweite Steuerfläche A₁ sein. Der Stufenkolben wird hierdurch in einer Richtung, insbesondere in einer Schließrichtung, vorgespannt und es sind vorteilhafterweise nur Schaltventile für die erste Verstellkammer eingesetzt.

Am Versorgungsanschluss kann beispielsweise ein Druckmittelspeicher angeschlossen sein.

Um eine Hubbewegung des Stufenkolbens des Proportionalventils genau regeln zu können, ist vorteilhafterweise eine Ist-Position mit einem Positionssensor erfassbar. Eine Steuerelektronik kann dann eine Abweichung der Ist-Position von einer gewünschten Soll-Position ermitteln und die Schaltventile der Vorsteuerventilschaltung derart ansteuern, dass der Stufenkolben des Proportionalventils in Richtung der Soll-Position verschoben wird oder in dieser verbleibt. Anhand der Schaltventile wird somit der Stufenkolben über die Steuerelektronik verstellt.

Das Proportionalventil kann beispielsweise als Sitzventil ausgestaltet sein. Der Stufenkolben hat dann vorzugsweise eine kleinere Stirnfläche A₄, eine rückseitige einen Federraum begrenzende Rückfläche A₃ und eine oder zwei zwischen der Stirnfläche und der Rückfläche als Ringfläche ausgebildete Steuerflächen A₁, A₂. Damit der Stufenkolben lediglich über die eine Steuerfläche oder die beiden Steuerflächen gesteuert werden kann, sind die Stirn- und Rückfläche etwa gleich groß und druckausgeglichen.

Mit dem Stufenkolben des Proportionalventils ist vorteilhafterweise eine Druckmittelverbindung zwischen dem Versorgungsanschluss und einem Ausgangsanschluss auf- und zusteuerbar. Somit kann eine zwischen dem Ausgangsanschluss und dem Versorgungsanschluss strömende Druckmittelmenge durch das Proportionalventil genau eingestellt werden und dieses beispielsweise als Stromregelventil eingesetzt werden.

Im Folgenden werden bevorzugte Ausführungsformen der Erfindung anhand schematischer Zeichnungen näher erläutert. Es zeigen:
Figur 1 einen hydraulischen Schaltplan einer Ventilanordnung gemäß einer ersten Ausführungsform
Figur 2 einen hydraulischen Schaltplan der Ventilanordnung gemäß einer zweiten Ausführungsform
Figur 3 einen hydraulischen Schaltplan der Ventilanordnung gemäß einer dritten Ausführungsform.

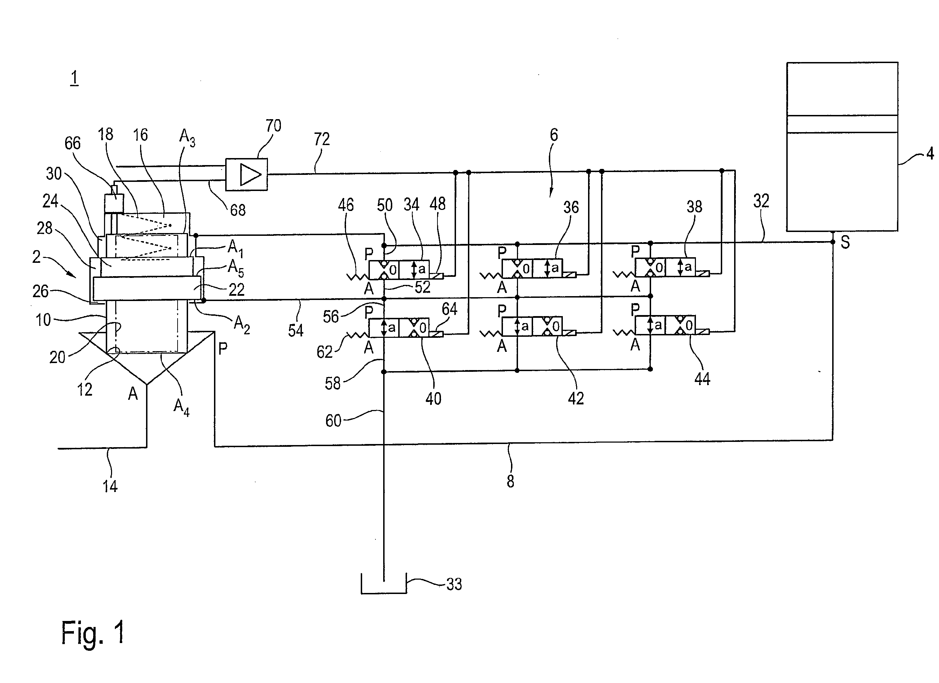

Gemäß Figur 1 ist eine erfindungsgemäße Ventilanordnung 1 dargestellt. Diese hat ein Proportionalventil 2 zum auf- und zusteuern einer Druckmittelverbindung zwischen einem Hydrospeicher 4 und einem nicht dargestellten Verbraucher. Das Proportionalventil 2 ist hierbei von einer Vorsteuerventilschaltung 6 steuerbar. Eine derartige Ventilanordnung 1 wird insbesondere für Applikationen in Druck-, Spritzgieß-, Press- oder Gießereimaschinen eingesetzt, da hierbei für hydraulische Verbraucher Proportionalventile 2 mit hoher Dynamik und einem hohen Durchfluss benötigt werden.

Das Proportionalventil 2 entspricht im Wesentlichen einem Einbaustetigventil oder einem Aktiv-Logikventil, wie es beispielsweise in dem Datenblatt der Anmeldering RD 21040/11.10 aufgezeigt ist. Allerdings hat das vorliegende Proportionalventil 2 gemäß der ersten Ausführungsform zusätzliche Steuerflächen A₁ und A₂, was untenstehend näher erläutert ist.

Das Proportionalventil 2 hat eingangsseitig einen Druckanschluss P und ausgangsseitig einen Arbeitsanschluss A. Der Druckanschluss P ist über eine Druckleitung 8 mit einem Speicheranschluss S des Hydrospeichers 4 verbunden. Das Proportionalventil 2 ist als Sitzventil mit einem Stufenkolben 10 ausgebildet, dem ein Ventilsitz 12 zugeordnet ist. Liegt der Stufenkolben 10 am Ventilsitz 12 an, so ist eine Druckmittelverbindung zwischen dem seitlichen bzw. radial angeordneten Druckanschluss und dem axial angeordneten Arbeitsanschluss A zugesteuert. Im abgehobenen Zustand des Stufenkolbens 10 ist diese Druckmittelverbindung zwischen Druckanschluss P und Arbeitsanschluss A aufgesteuert. An den Arbeitsanschluss A ist eine Arbeitsleitung 14 angeschlossen, die mit einem nicht dargestellten Verbraucher, beispielsweise einem Gießzylinder, verbunden ist.

Der Stufenkolben 10 hat eine zum Ventilsitz weisende Stirnfläche A₄ und eine davon wegweisende rückseitige Rückfläche A₃. Die Rückfläche A₃ begrenzt einen Federraum 16 in dem eine Ventilfeder 18 angeordnet ist. Diese stützt sich an einem Ventilgehäuse des Proportionalventils 2 ab und beaufschlagt den im Gehäuse des Proportionalventils 2 geführten Stufenkolben 10 mit einer Federkraft in Richtung des Ventilsitzes 12. Die Rückfläche A₃ und die Stirnfläche A₄ weisen etwa eine gleichgroße Fläche auf. Zum Druckausgleich sind sie über zumindest einen durch den Stufenkolben 10 sich axial vollständig hindurch erstreckenden Fluidpfad 20 verbunden. Der Stufenkolben 10 hat einen ersten Radialbund 22 und einen sich in Richtung der Rückfläche A₃ unmittelbar daran anschließenden zweiten Radialbund 24. Ein Durchmesser des zweiten Radialbunds 24 liegt zwischen einem Durchmesser der Rückfläche A₃ und einem Außendurchmesser des ersten Radialbunds 22. Durch den Radialbund 22 ist an dem Stufenkolben 10 die ringförmige in die gleiche Richtung wie die Stirnfläche A₄ weisende Steuerfläche A₂ ausgebildet, die eine erste Verstellkammer 26 begrenzt. Auf der von der Steuerfläche A₂ wegweisenden Seite des ersten Radialbunds 22 ist eine Ringfläche A₅ ausgebildet, deren Fläche kleiner als die Steuerfläche A₂ ist, da sich der zweite Radialbund 24, wie vorstehend erläutert, direkt an den ersten Radialbund 22 in einer Richtung weg von der Stirnfläche A₄ anschließt. Die Ringfläche A₅ begrenzt einen Ringraum 28 der druckentlastet mit einem Tank verbunden ist, was in der Figur 1 der Einfachheit halber nicht dargestellt ist. Die von der Stirnfläche A₄ des Stufenkolbens 10 wegweisende Stirnfläche des zweiten Radialbunds 24 bildet die Steuerfläche A₁. Diese ist etwa halb so groß wie die von dieser wegweisende Steuerfläche A₂, womit ein Flächenverhältnis zwischen den Steuerflächen A₁ und A₂ etwa 1:2 ist. Die kleinere Steuerfläche A₁ begrenzt eine zweite Verstellkammer 30.

Die zweite Verstellkammer ist über eine Speicherleitung 32 unmittelbar mit dem Speicheranschluss S des Hydrospeichers 4 verbunden. Somit wird die Steuerfläche A₁ mit Druckmittel des Hydrospeichers 4 beaufschlagt, und auf den Stufenkolben 10 wirkt somit über die Steuerfläche A₁ ein Speicherdruck in Schließrichtung des Proportionalventils 2, womit dieser äußerst dicht auf seinem Ventilsitz 12 anliegen kann.

Zum Verbinden der ersten Verstellkammer 26 mit dem Hydrospeicher 4 oder mit einem Tank 33 ist die Vorsteuerventilschaltung 6 vorgesehen. Diese hat drei fluidisch parallel angeordnete Schaltventile 34, 36 und 38 die im Strömungspfad zwischen dem Speicheranschluss S und der ersten Verstellkammer 26 angeordnet sind und somit eine Druckmittelverbindung zwischen dem Hydrospeicher 4 und der ersten Verstellkammer 26 steuern können. Drei weitere fluidisch parallel angeordnete Schaltventile 40, 42 und 44 sind im Strömungspfad zwischen der ersten Verstellkammer 26 und dem Tank 32 angeordnet. Sie steuern somit eine Druckmittelverbindung zwischen der ersten Verstellkammer 26 und dem Tank 32. Die Schaltventile 34 bis 44 sind als 2/2-Wegeventile ausgestaltet.

Die Schaltventile 34 bis 38 im Strömungspfad zwischen dem Hydrospeicher 4 und der ersten Verstellkammer 26 weisen jeweils eine Ventilfeder 46 auf, von denen der Einfachheit halber nur eine mit einem Bezugszeichen versehen ist, über die ihr Ventilschieber in Richtung einer Grundstellung in Form einer im Wesentlichen leckagefreien Schließstellung 0 mit einer Federkraft beaufschlagt ist. Des Weiteren weisen die Schaltventile 34 bis 38 einen elektromagnetischen Aktuator 48, von denen der Einfachheit halber ebenfalls nur einer mit einem Bezugszeichen versehen ist, auf, über den der jeweilige Ventilschieber in Richtung einer als Öffnungsstellung dienenden Schaltstellung a verschiebbar ist. Die Schaltventile 34 bis 38 haben jeweils einen Druckanschluss P und einen Arbeitsanschluss A. An einen jeweiligen Druckanschluss P ist jeweils eine von der Speicherleitung 32 abzweigende Zweigleitung 50 angeschlossen, von denen in der Figur 1 eine mit einem Bezugszeichen versehen ist. An einen jeweiligen Arbeitsanschluss A der Schaltventile 34 bis 38 ist ebenfalls jeweils eine Zweigleitung 52 angeschlossen, von denen eine in der Figur 1 mit einem Bezugszeichen versehen ist, die in einer gemeinsamen mit der ersten Verstellkammer 26 verbundenen Zwischenleitung 54 münden.

Von der Zwischenleitung 54 zweigt für ein jeweiliges Schaltventil 40 bis 44 eine weitere Zweigleitung 56 ab, von denen der Einfachheit halber nur eine mit einem Bezugszeichen versehen ist, die jeweils mit einem Druckanschluss P der Schaltventile 40 bis 44 verbunden sind. An einen Arbeitsanschluss A der Schaltventile 40 bis 44 ist jeweils eine weitere Zweigleitung 58 angeschlossen, von denen wiederum nur eine mit einem Bezugszeichen versehen ist, die in einer gemeinsamen mit dem Tank 33 verbundenen Tankleitung 60 münden. Die Schaltventile 40 bis 44 haben ebenfalls jeweils eine Ventilfeder 62, von denen in der Figur 1 eine mit einem Bezugszeichen versehen ist, die jeweils einen Ventilschieber in Richtung ihrer als Öffnungsstellung dienenden Schaltstellung a mit einer Federkraft beaufschlagen. Über einen elektrischen Aktuator 64, von denen einer mit einem Bezugszeichen versehen ist, ist der jeweilige Ventilschieber der Schaltventile 40 bis 44 in Richtung einer Schließstellung 0 entgegen der Federkraft der Ventilfeder 62 verschiebbar.

Zur Positionsbestimmung des Stufenkolbens 10 des Proportionalventils 2 ist ein Positionssensor 66 vorgesehen, der federraumseitig angeordnet ist und die aktuelle Ist-Position des Stufenkolbens 10 misst und über eine Signalleitung 68 an eine Steuerelektronik 70 meldet. Diese vergleicht die Ist-Position mit einer Soll-Position und steuert die Aktuatoren 48 und 64 der Schaltventile 34 bis 38 bzw. 40 bis 44 über Signalleitungen 72 entsprechend an.

Erfindungsgemäß weisen die Schaltventile unterschiedliche Nenngrößen auf und haben deswegen unterschiedliche Nenndurchflusswerte. Die Schaltventile 34 und 40 sind hierbei große Schaltventile, und die Schaltventile 36 und 42 kleine Schaltventile. Die weiteren Schaltventil 38 bzw. 44 sind optional und dienen dazu einen Durchflusswert von Druckmittel weiter zu erhöhen. Vorzugsweise sind die weiteren Schaltventile 38 und 44 ebenfalls als große Schaltventile ausgebildet. Zusätzlich zu den Schaltventile 38 und/oder 44 können je nach benötigter Stellzeit des Proportionalventils 2 noch weitere Schaltventile angeordnet werden.

Zum Verschieben des Stufenkolbens 10 in einer Richtung weg von seinem Ventilsitz 12 zu einer bestimmten Sollposition sind die Schaltventile 40 bis 44 in ihrer Schließstellung 0 zugesteuert. Zum schnellen Verschieben des Stufenkolbens 10 wird zumindest der Ventilschieber des Schaltventils 34 in die Schaltstellung a verschoben womit eine große Druckmittelmenge vom Hydrospeicher 4 zur ersten Verstellkammer 26 strömen kann. Soll die Verschiebegeschwindigkeit weiter erhöht werden, so wird zusätzlich zumindest das große Schaltventil 38 geöffnet. Da die Steuerfläche A₂ größer als die Steuerfläche A₁ ist, wird der Stufenkolben 10 entgegen der Federkraft der Ventilfeder 18 vom Ventilsitz 12 abgehoben wird. Ist der Stufenkolben 10 etwa im Bereich seiner Soll-Position angelangt, so werden bis auf das kleine Schaltventil 36 alle Schaltventile geschlossen und über das kleine Schaltventil 36 erfolgt eine Feinpositionierung in einer Verschieberichtung des Stufenkolbens weg vom Ventilsitz 12.

Soll der Stufenkolben 10 in Richtung seines Ventilsitzes 12 verschoben werden, so sind die Schaltventile 34 bis 38 in ihrer Schaltstellung 0 zugesteuert und es werden die Schaltventile 40 bis 44 eingesetzt, um Druckmittel aus der ersten Verstellkammer 26 zum Tank 33 zu entlassen. Die großen Schaltventile 40 und 44 dienen zum schnellen Verschieben des Stufenkolbens 10 in Richtung des Ventilsitzes 12 und das kleine Schaltventil 42 bei geschlossenen Schaltventilen 40 und 44 zur Feinjustierung in dieser Richtung.

Der Stufenkolben 10 kann somit durch ein oder mehrere großer im Strömungspfad zwischen dem Hydrospeicher 4 und der ersten Verstellkammer 26 angeordneter Schaltventile 34, 38 schnell in einer Richtung weg vom Ventilsitz 12 und durch ein oder mehrerer großer im Strömungspfad zwischen der ersten Verstellkammer 26 und dem Tank 33 angeordneter Schaltventile 40, 44 in einer Richtung hin zum Ventilsitz 12 schnell bewegt werden. Zur Feinjustierung des Stellkolbens 10 in einer Richtung weg vom Ventilsitz 12 dient dann das im Strömungspfad zwischen dem Hydrospeicher 4 und der ersten Verstellkammer 26 angeordnete kleine Schaltventil 36 und in einer Richtung hin zum Ventilsitz 12 das im Strömungspfad zwischen der ersten Verstellkammer 26 und dem Tank 33 angeordnete kleine Schaltventil 42.

Die Schaltventile 34 bis 44 können getaktet mit einer Pulsweitenmodulation angesteuert werden. Hierbei ist möglich, dass die Pulsweite unter einer Ventildurchschaltzeit liegt, wodurch die Schaltventile 34 bis 44 ballistisch ansteuerbar sind. Durch die ballistische Ansteuerung kann zusätzlich ein Durchflusswert der Schaltventile 34 bis 44 eingestellt werden.

Da gemäß Figur 1 nur eine Verstellkammer 26 des Proportionalventils 2 mittels den Schaltventilen 34 bis 44 angesteuert wird, werden vorteilhafter Weise nur wenig Schaltventile benötigt.

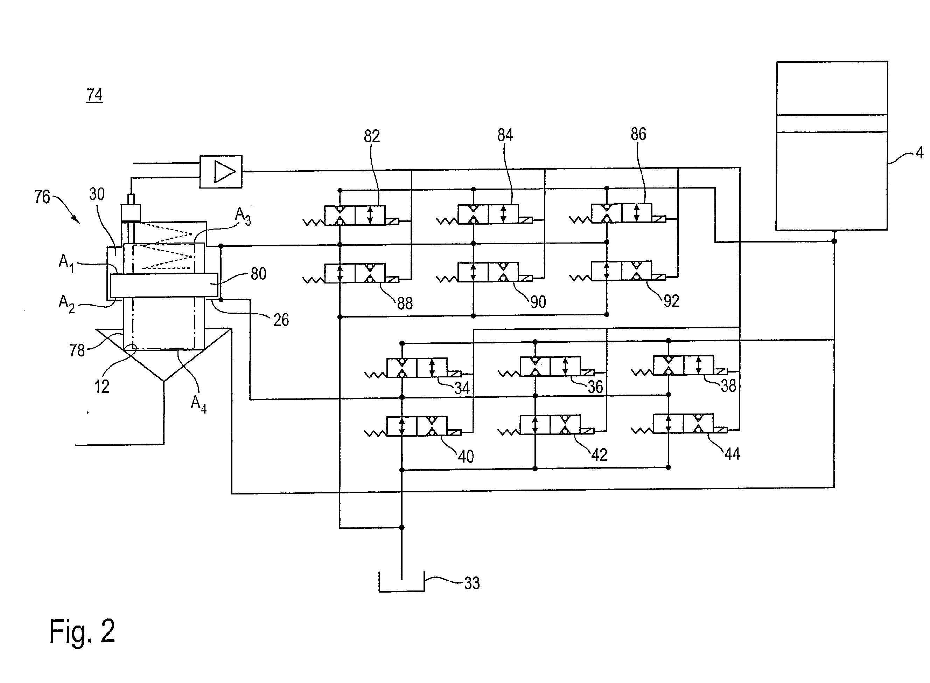

In Figur 2 ist eine weitere Ausführungsform der Ventilanordnung 74 offenbart, bei der im Unterschied zur Figur 1 das Proportionalventil 76 zwei gleich große Steuerflächen A₂ und A₁ aufweist. Der im Vergleich zur Ausführungsform aus Figur 1 als Standardkolben ausgebildete Stufenkolben 78 hat hierzu nur einen einzigen Radialbund 80. Die Stirnfläche A₄ und die Rückfläche A₃ sind entsprechend der ersten Ausführungsformen aus Figur 1 gleich groß. Die erste Verstellkammer 26 ist entsprechend dem vorhergehenden Ausführungsbeispiel aus Figur 1 über die Schaltventile 34 bis 44 entweder mit dem Hydrospeicher 4 oder dem Tank 33 verbindbar.

Die zweite Verstellkammer 30, die von der Steuerfläche A₁ begrenzt ist, ist nun ebenfalls entweder mit dem Hydrospeicher 4 oder dem Tank 33 über Schaltventile 82 bis 92 verbindbar. Die Schaltventile 82 bis 86 sind hierbei fluidisch parallel im Strömungspfad zwischen Hydrospeicher 4 und der zweiten Verstellkammer 30 vorgesehen und entsprechend wie die Schaltventile 34 bis 38 ausgestaltet. Im Strömungspfad zwischen der zweiten Verstellkammer 30 und dem Tank 33 sind dann die Schaltventile 88 bis 92 angeordnet, die entsprechend den Schaltventilen 40 bis 44 ausgebildet sind. Je nach gewünschter Position des Stufenkolbens 78 werden die Steuerflächen A₁ und A₂ mit Druck beaufschlagt oder zum Tank entlastet.

Um den Stufenkolben 78 in einer Richtung weg vom Ventilsitz 12 zu bewegen ist die zweite Verstellkammer 30 über die Schaltventile 88 bis 92 mit dem Tank 33 und die erste Verstellkammer 26 über die Schaltventile 34 bis 38 mit dem Hydrospeicher 40 verbunden. Die anderen Schaltventile 82 bis 86 und 40 bis 44 sind geschlossen. Zum schnellen Verstellen sind die Schaltventile 34 und 38 eingesetzt. Zur Feinpositionierung dient das Schaltventil 36. Somit wird lediglich der Zulauf von Druckmittel in die erste Verstellkammer 26 gesteuert, während die zweite Verstellkammer 30 einfach zum Tank 33 entlastet ist. Denkbar wäre allerdings auch die Entlassung von Druckmittel aus der zweiten Verstellkammer 30 durch die Schaltventile 88 bis 92 zu steuern.

Zum Verschieben des Stufenkolbens 78 in Richtung hin zum Ventilsitz 12 wird dann die erste Verstellkammer 26 über die Schaltventile 40 bis 44 mit dem Tank 33 und die zweite Verstellkammer 30 über die Schaltventile 82 bis 86 mit dem Hydrospeicher 4 verbunden. Die anderen Schaltventile 88 bis 92 und 34 bis 38 sind geschlossen. Zum schnellen Verstellen sind dann die Schaltventile 82 und 86 eingesetzt. Zur Feinpositionierung dient dann das Schaltventil 84. Auch hier wird somit lediglich der Zulauf von Druckmittel in die zweite Verstellkammer 30 gesteuert, während die erste Verstellkammer 26 einfach zum Tank 33 entlastet ist. Selbstverständlich könnte auch hier die Entlassung von Druckmittel aus der Verstellkammer 26 durch die Schaltventile 40 bis 44 gesteuert werden.

Durch die Möglichkeit der Verbindung der Verstellkammern 26 und 30 entweder mit dem Hydrospeicher 4 oder mit dem Tank 33 wirkt auf den Stufenkolben 78 in beide Richtungen eine im Vergleich zu ersten Ausführungsform deutlich höhere Verstellkraft, um den Stufenkolben 78 zu bewegen.

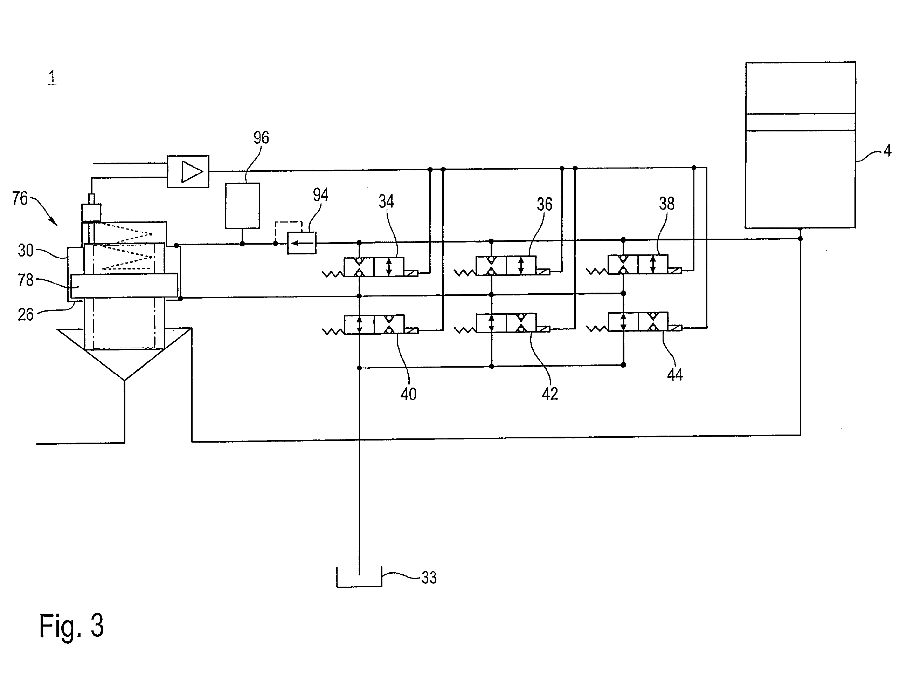

In einer weiteren Ausführungsform der Ventilanordnung 1 gemäß Figur 3 ist im Unterschied zur Ausführungsform aus Figur 2 nur die erste Verstellkammer 26 über die Schaltventile 34 bis 38 mit dem Hydrospeicher 4 und über die Schaltventile 40 bis 44 mit dem Tank 33 verbindbar. Die zweite Verstellkammer 30 ist dagegen über ein Druckreduzierventil 94 mit dem Hydrospeicher 4 verbunden. Das schematisch dargestellte Druckreduzierventil 94 ist somit im Strömungspfad zwischen dem Hydrospeicher 4 und der zweiten Verstellkammer 30 angeordnet und derart ausgestaltet, dass der Speicherdruck des Hydrospeichers 4 in der zweiten Verstellkammer 30 etwa halbiert ist. Im Strömungspfad zwischen dem Druckreduzierventil 94 und der zweiten Verstellkammer 30 ist ein Hydrospeicher 96 vorgesehen, der zu kurzen Stellzeiten des Stufenkolbens 78 führt, da aus der zweiten Verstellkammer 30 verdrängtes Druckmittel in diesem äußerst schnell gefördert werden kann und umgekehrt bei einer Vergrößerung der zweiten Verstellkammer 30 Druckmittel von diesem äußerst schnell in die zweite Verstellkammer 30 eingebracht werden kann.

Je nach gewünschter Position des Stufenkolbens 78 des Proportionalventils 76 wird entsprechen der ersten Ausführungsform aus Figur 1 die erste Ventilkammer 26 über die Schaltventile 34, 36 und/oder 38 mit dem Hydrospeicher 4 oder über die Schaltventile 40, 42 und/oder 44 mit dem Tank 33 verbunden.

Offenbart ist, insbesondere erfindungsgemäß, eine Ventilanordnung mit einem Proportionalventil das über eine Vorsteuerschaltung vorgesteuert ist. Diese hat zum Verstellen eines Ventilschiebers des Proportionalventils in eine erste Richtung zumindest zwei Schaltventile mit unterschiedlichen Nenngrößen. Zum Verstellen des Ventilschiebers in entgegengesetzter Richtung sind ebenfalls zumindest zwei Schaltventile in unterschiedlichen Nenngrößen vorgesehen. Das jeweils größere Schaltventil dient zum schnellen Verstellen des Ventilschiebers und führt somit zu kurzen Stellzeiten, während die jeweils kleineren Schaltventile zur Feinpositionierung des Ventilschiebers eingesetzt werden.

### Bezugszeichenliste:

- 1: Ventilanordnung
- 2: Proportionalventil
- 4: Hydrospeicher
- 6: Vorsteuerventilschaltung
- 8: Druckleitung
- 10: Stufenkolben
- 12: Ventilsitz
- 14: Arbeitsleitung
- 16: Federraum
- 18: Ventilfeder
- 20: Fluidpfad
- 22: erster Radialbund
- 24: zweiter Radialbund
- 26: erste Verstellkammer
- 28: Ringraum
- 30: zweite Verstellkammer
- 32: Speicherleitung
- 33: Tank
- 34: Schaltventil
- 36: Schaltventil
- 38: Schaltventil
- 40: Schaltventil
- 42: Schaltventil
- 44: Schaltventil
- 46: Ventilfeder
- 48: Aktuator
- 50: Zweigleitung
- 52: Zweigleitung
- 54: Zwischenleitung
- 56: Zweigleitung
- 58: Zweigleitung
- 60: Tankleitung
- 62: Ventilfeder
- 64: Aktuator
- 66: Positionssensor
- 68: Signalleitung
- 70: Steuerelektronik
- 72: Signalleitung
- 74: Ventilanordnung
- 76: Proportionalventil
- 78: Stufenkolben
- 80: Radialbund
- 82: Schaltventil
- 84: Schaltventil
- 86: Schaltventil
- 88: Schaltventil
- 90: Schaltventil
- 92: Schaltventil
- 94: Druckreduzierventil
- 96: Hydrospeicher
- A₁: Steuerfläche
- A₂: Steuerfläche
- A₃: Rückfläche
- A₄: Stirnfläche
- A₅: Ringfläche
- P: Druckanschluss
- A: Arbeitsanschluss
- S: Speicheranschluss

## Patentansprüche

1. Ventilanordnung mit einem hydraulischen Proportionalventil (2), das über eine Vorsteuerventilschaltung (6) vorgesteuert ist, wobei jeweils zumindest zwei Schaltventile (34, 36; 40 42) der Vorsteuerventilschaltung (6) in einem Strömungspfad zwischen einem Versorgungsanschluss (S) und einer Verstellkammer (26) des Proportionalventils (6) und in einem Strömungspfad zwischen einem Tankanschluss (33) und der Verstellkammer (26) angeordnet sind, **dadurch gekennzeichnet dass** die zumindest zwei Schalteventile (34, 36; 40, 42) zumindest eines Strömungspfads unterschiedliche Nenngrößen aufweisen.

2. Ventilanordnung nach Anspruch 1, wobei die Schaltventile (34; 36; 40, 42) eines jeweiligen Strömungspfads fluidisch parallel angeordnet sind.

3. Ventilanordnung nach Anspruch 1 oder 2, wobei zumindest ein Schaltventil (34, 36, 40, 42) eines jeweiligen Strömungspfads getaktet mit einer Pulsweitenmodulation ansteuerbar ist.

4. Ventilanordnung nach einem der vorhergehenden Ansprüche, wobei das Proportionalventil (2) einen Stufenkolben (10) mit einer ersten die Verstellkammer (26) begrenzende Steuerfläche (A₂) und einer zweiten eine zweite Verstellkammer (28) begrenzende Steuerfläche (A₁) hat, wobei die Steuerflächen (A₁, A₂) in entgegengesetzte Richtungen wirken und wobei die erste Verstellkammer (26) durch die Schaltventile (34, 36; 40, 42) gesteuert ist.

5. Ventilanordnung nach Anspruch 4, wobei jeweils zumindest zwei Schaltventile (82, 84; 88, 90) der Vorsteuerventilschaltung (6) in einem Strömungspfad zwischen dem Versorgungsanschluss (S) und der zweiten Verstellkammer (30) und in einem Strömungspfad zwischen dem Tankanschluss (33) und der zweiten Verstellkammer (30) angeordnet sind.

6. Ventilanordnung nach Anspruch 4, wobei im Strömungspfad zwischen der zweiten Verstellkammer (30) und dem Versorgungsanschluss (S) ein Druckreduzierventil (94) angeordnet ist.

7. Ventilanordnung nach Anspruch 6, wobei ein Druckmittelspeicher (96) im Strömungspfad zwischen dem Druckreduzierventil (94) und der zweiten Verstellkammer (30) angeschlossen ist.

8. Ventilanordnung nach einem der Ansprüche 5 bis 7, wobei die Steuerflächen (A₁ und A₂) des Stufenkolbens (78) des Proportionalventils (76) im Wesentlichen gleich groß sind.

9. Ventilanordnung nach Anspruch 4, wobei die zweite Verstellkammer (30) unmittelbar mit dem Versorgungsanschluss (S) verbunden ist, und wobei die erste Steuerfläche (A₂) größer als die, insbesondere in Schließrichtung wirkende, zweite Steuerfläche (A₁) ist.

10. Ventilanordnung nach einem der vorhergehenden Ansprüche, wobei an den Versorgungsanschluss (S) ein Druckmittelspeicher (4) angeschlossen ist.

11. Ventilanordnung nach einem der vorhergehenden Ansprüche, wobei eine Ist-Position des Stufenkolbens (10) des Proportionalventils (2) mit einem Positionssensor (66) erfassbar ist, und wobei eine Abweichung der Ist-Position von einer Soll-Position von einer Steuerelektronik (70) ermittelt ist und die Schaltventile (34, 36; 40, 42) in Abhängigkeit der Abweichung von der Steuerelektronik (70) angesteuert sind

12. Ventilanordnung nach einem der vorhergehenden Ansprüche, wobei das Proportionalventil (2) als Sitzventil ausgestaltet ist und der Stufenkolben (10) eine Stirnfläche (A₄), eine rückseitige einen Federraum (16) begrenzende Rückfläche (A₃) und zwei zwischen der Stirnfläche (A₄) und der Rückfläche (A₃) als Ringfläche ausgebildete Steuerflächen (A₁, A₁) aufweist, wobei die Stirn- und Rückflächen (A₃, A₄) gleich groß und druckausgeglichen sind.

13. Ventilanordnung nach einem der vorhergehenden Ansprüche, wobei mit dem Stufenkolben (10) des Proportionalventils (2) eine Druckmittelverbindung zwischen dem Versorgungsanschluss (S) und einem Ausgangsanschluss (A) des Proportionalventils auf-und zusteuerbar ist.
